# EUROPEAN PATENT APPLICATION

(11) **EP 0 961 509 A2**
(43) Date of publication of application: **01.12.1999**
(21) Application number: 99303585.6
(22) Date of filing: 07.05.1999
(51) Int. Cl.: H04Q 7/22

(54) **Method of initiating and terminating data transmission**

(30) Priority: 26.05.1998 JP 14478898
(71) Applicant: ALPS ELECTRIC CO., LTD., Ota-ku Tokyo 145 (JP)
(72) Inventor: Izumi, Hideo, Soma-shi, Fukushima-ken (JP); Miura, Yoshinori, Soma-shi, Fukushima-ken (JP); Mangan, Peter, South Circular Road, Limerick (IE); Forde, Brian, Dublin 3 (IE); Murphy, Jenny, Harolds Cross, Dublin 6 (IE); Bartley, Ian, Fermoy, County Cork (IE)
(74) Representative: Kensett, John Hinton

(57) **Abstract**

Communication initiation or termination control is performed by detecting the existence/non-existence of a carrier or a special code contained in data transmitted in DECT data communication so that a communication slave unit is maintained in a sleeping state except when it is necessary to perform communication, thereby reducing power consumption. A communication terminal has a control unit (9), a communication initiation signal detector (12) which detects a carrier of transmitted data and informs a control section of a detection result, and a communication termination signal detector (13) which detects a carriage return code or an end-of-file code contained in transmitted data or received data at the end of the data and informs the control section of a detection result. Communication initiation or termination control is performed by an instruction from the control section according to information from the communication initiation signal detector or information from the communication termination signal detector. Data communication initiation or termination control is also performed by checking an ID code of the terminal contained in received data.

## Description

The present invention relates to a method of initiating and terminating data communication based on Digital Enhanced Cordless Telecommunication (DECT), among mobile communication units, based on time division multiple access (TDMA) methods.

Multiple access methods for enabling a plurality of users to simultaneously communicate by sharing a wireless communication channel are known. Examples of such methods are a frequency division multiple access (FDMA) method, a time division multiple access (TDMA) method, and a code division multiple access (CDMA) method.

For example, in Japan, the Personal Handyphone System (PHS), which is a TDMA system, etc., has been put to practical use. A system similar to PHS, the Digital Enhanced Cordless Telecommunication (DECT) system, has been adopted and is widely used in accordance with common specifications in European countries including the former Soviet Union, African countries, Middle and Near East countries, South American countries, Oceanian countries, China, India, Taiwan, Singapore, Malaysia, etc.

The DECT system was developed based on a common European wireless communication standard established by the European Telecommunication Standard Institute (ETSI) presupposing that it would enable data transmission as well as speech transmission.

As a DECT frequency band, a band of 1.88 to 1.89 GHz is used in Europe, a band of 1.91 to 1.93 GHz in South America, and a band of 1.90 to 1.92 GHz in China. For communication in these bands, 10 physical channels are used and 12-multiplexing time division is performed.

For DECT data transmission, an RS-232C/UART (IEEE-based) serial interface is used. A procedure is used in which serial data is converted into a code in accordance with the DECT before being transmitted, and the code is received and demodulated to regenerate the serial data.

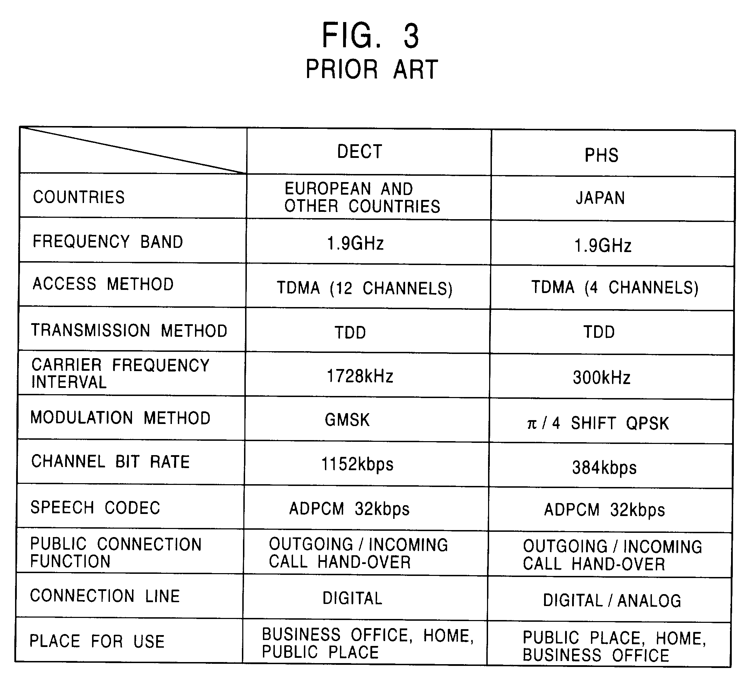

Fig. 3 shows an example of the basic specifications for the PHS used in Japan and the above-described DECT system.

Data communication based on the above-described DECT lacks protocols, such as those of the Ethernet, which enable a terminal transmitting a signal to be accessed with priority by a server detecting a carrier of the signal, or protocols, such as those of Token Ring or Ethernet, which enables a server to access terminals one after another to check whether any one of the terminals is making a communication request. That is, no protocols have been established to enable recognition of a time to initiate DECT communication and a time to stop DECT communication, and DECT communication cannot be smoothly initiated and terminated. In particular, battery-driven devices such as mobile communication slave units must minimize power consumption except when operated to perform communication. There has been a demand for a solution to this problem.

In view of these circumstances, an object of the present invention is to provide a method of initiating and terminating data communication in which, while the compatibility with the RS232C/UART interface is maintained, the communication initiating and terminating operation of a data communication slave unit is controlled according to the existence/non-existence of a carrier or a special code contained in transmitted data to reduce the power consumption by maintaining the communication unit in a sleeping state except when it is necessary to perform communication.

To achieve this object, according to the present invention, there is provided a method of initiating and terminating data communication using a DECT data transmitting and receiving apparatus comprising a DECT coding section for DECT-encoding serial transmission data, a transmitting section for transmitting, at a predetermined transmission rate, the data encoded by the DECT coding section, a receiving section for receiving DECT data, a demodulation section for demodulating the received DECT data received by the receiving section to output a serial reception data, a frequency control section for controlling frequencies in the transmitting section and the receiving section, a transmitting-receiving switching section for switching the connection between an antenna and the transmitting section and the connection between the antenna and the receiving section, a transmission and reception slots control section for performing slot control of the serial transmission data and the serial reception data in accordance with DECT, a control section having a storage section in which a control program is stored, from which data can be read, and to which data can be written, the control section controlling each of the other sections, communication initiation signal detection means for detecting a communication initiation signal contained in transmitted data, and for informing the control section of a detection result, communication termination signal detection means for detecting a communication termination signal contained in transmitted data or received data, and for informing the control section of a detection result, and communication initiation and termination control means for controlling communication initiation or communication termination control by an instruction from the control section according to the information from the communication initiation signal detection means or the communication termination signal detection means.

In a first method of initiating and terminating data communication in accordance with the present invention, communication is initiated by activating a slave unit from a sleeping state into a communicating state when a carrier of the serial transmission data is detected by the communication initiation signal detection means, and communication is terminated by returning the slave unit from the communicating state to the sleeping state when a code such as a carriage return (CR) code or an end-of-file (EOF) is detected at the end of the serial transmission data by the communication termination signal detection means.

In a second method of initiating and terminating data communication in accordance with the present invention, a master unit initiates communication between the master unit and the slave unit after the master unit has confirmed that an ID code in data transmitted from the slave unit is a predetermined code, and terminates communication between the master unit and the slave unit when an ID code of the slave unit or a predetermined code is not contained in data transmitted from the master unit to the slave unit.

In a third method of initiating and terminating data communication in accordance with the present invention, communication is initiated according to the communication initiation condition in the first method or the communication initiation condition described in the second method, and communication is terminated according to the communication termination condition in the first method or the communication termination condition in the second method.

One of the above-described first to third methods can be used as a protocol for initiating and terminating DECT communication, for which no protocol for initiating and terminating data communication has been established.

Embodiments of the invention will now be described, by way of example only, with reference to the accompanying drawings, in which:

Fig. 1 is a block diagram showing the configuration of functional sections of a DECT transmitting and receiving apparatus which represents an embodiment of the present invention.

Fig. 2 is a diagram showing the data format for DECT transmission and reception in the embodiment of the present invention.

Fig. 3 is a diagram showing an example of the basic specifications for the PHS used in Japan and the DECT system.

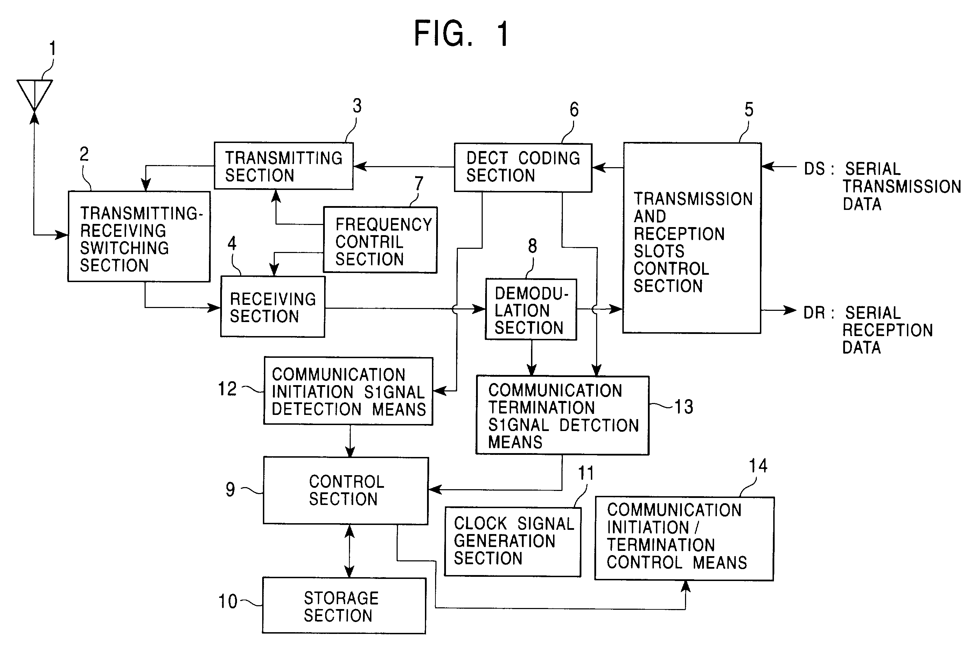

An embodiment of the present invention will be described below with reference to the accompanying drawings. Fig. 1 is a block diagram showing the configuration of functional sections of a data communication slave unit which represents an embodiment of the present invention. In the data communication slave unit shown in Fig. 1, an antenna 1 is selectively connected to a transmitting section 3 or to a receiving section 4 by a transmitting-receiving switching section 2.

A serial transmission data DS is supplied to a DECT coding section 6 via a transmission and reception slots control section 5, and is converted into a signal in the DECT format by the DECT coding section 6. The signal in the DECT format is converted into a transmitted signal by the transmitting section 3 operating at a frequency designated by a frequency control section 7.

A signal received by the receiving section 4 operating at a frequency designated by the frequency control section 7 is demodulated by a demodulation section 8 to extract serial transmission data DR, which is output after being processed in the transmission and reception slots control section 5.

A control section 9 is formed by a central processing unit (CPU) and peripheral devices. A storage section 10 is connected to the control section 9. The storage section 10 is formed by a read-only memory (ROM) (in which a control program is stored), an electrically erasable programmable read-only memory (EEPROM) (in which an ID code, clock rate conversion data, a product address, and frequency adjustment data are recorded), and a random access memory (RAM) (in which temporary data is written, or from which temporary data is read out). The control section 9 controls the transmitting-receiving switching section 2, the transmission and reception slots control section 5, the frequency control section 7, etc. A clock signal generation section 11 generates a signal for switching timing of each of the above-described sections.

A communication initiation signal detection means 12 determines the existence/non-existence of a carrier in the DECT coding section 6. If the communication initiation signal detection means 12 has detected a carrier, it informs the control section 9 of the existence of the carrier.

A communication completion signal detection means 13 can detect a carriage return (CR) code or an end-of-file (EOF) code at an end of transmitted data, and can determine whether the ID code for this unit or a predetermined code is not contained in data supplied to the demodulation section 8 via the receiving section 2. The communication termination signal detection means informs the control section 9 of the existence or non-existence of one of these codes.

The control section 9 outputs a signal according to the information signal from the communication initiation signal detection means 12 or the communication completion signal detection means 13. A communication initiation/termination control means 14 performs communication initiation control or communication termination control based on the signal output from the control section 9.

The above-described data transmitting and receiving apparatus may be one complete set without a speech coding and decoding processing section, a display device such as a liquid crystal display, a key input device, and so on, which are not illustrated and will not be described.

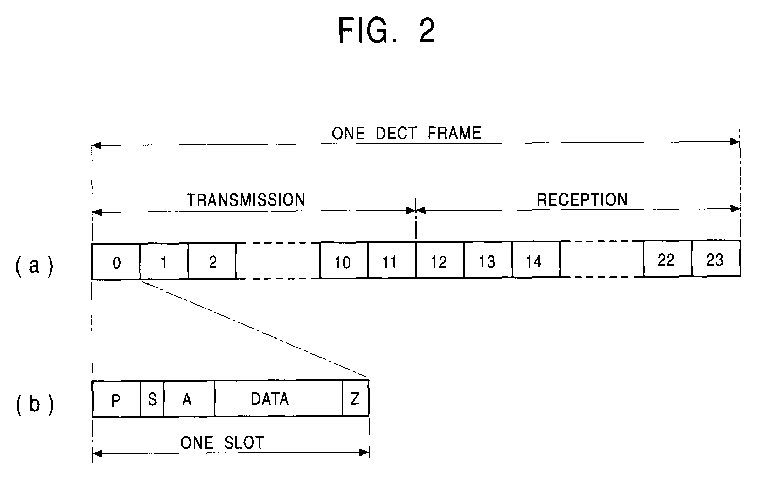

Fig. 2 is a diagram for explaining the data format for DECT transmission and reception in the embodiment of the present invention. In (a) of Fig. 2, one frame in one of a plurality of DECT channels is shown. A group of twelve slots 0 to 11 are used for transmission and another group of twelve slots 12 to 23 are used for reception, and each of the group of transmission slots and the group of reception slots occupy a time period of 5 msec.

One of the slots is shown enlarged in (b) of Fig. 2. The symbols in (b) of Fig. 2 have meanings shown below.
P: sync preamble ... idling time for synchronization
S: sync word ... signal for identification of DECT signal
A: ID code ... identification code for identification of the other-end communicating terminal and some other control signal
DATA: data region ... transmitted data (originally for speech)
Z: error bit ... parity check result

The ID code for detection of initiation or completion of communication is set in the region A shown in (b) of Fig. 2, and a carriage return (CR) code or an end of file (EOF) code for detection of completion of communication is written at the end of the region DATA shown in (b) of Fig. 2.

The first method of initiating and terminating data transmission in accordance with the present invention comprises initiating communication by switching the slave unit from a sleeping state to a communicating state when a carrier of a serial transmission data is detected by the communication initiation signal detection means 12, and terminating communication by returning the slave unit from the communicating state to the sleeping state when a carriage return (CR) code or end-of-file (EOF) code is detected at the end of the serial transmission data by the communication termination signal detection means 13.

The second method of initiating and terminating data transmission in accordance with the present invention comprises initiating communication between the master and slave units if it were confirmed that the ID code in data transmitted from the slave unit to the master unit is a predetermined code, and terminating communication between the master and slave units if data transmitted from the master unit to the slave unit does not contain the ID code of the slave unit or a predetermined code.

The third method of initiating and terminating data transmission in accordance with the present invention comprises initiating communication if the communication initiation condition of the first or second method is satisfied, and terminating communication if the communication termination condition of the first or second method is satisfied.

One of the above-described first to third data transmission initiation and termination methods can be used as a protocol for initiating and terminating DECT communication, for which the desired data communication protocol has not been established.

DECT communication initiated and terminated by the method of the present invention may be used for replacement of a cable-connected modem or printer, for the operation of a radio-frequency (RF) remote controller or a telemeter, for cancellation of apartment autolocking, for a wireless system using point-of-sale (POS) terminals in family restaurants, for increasing the speed of processing in such a POS system by combining a credit card reader and a wireless POS terminal, etc.

While the embodiment of the present invention has been described in detail with reference to the drawings, the present invention is not limited thereto, and may include any design changes or the like, as long as the changes do not depart from the scope of the present invention.

For example, a predetermined special code other than the carriage return (CR) code or the end-of-file (EOF) code may be used for detecting completion of communication.

According to the present invention, as described above, a battery-driven DECT data communication is switched from a sleeping state to an operating state or from the operating state to the sleeping state by detecting an ID code contained in transmitted data or a special code such as a CR code or an EOF code at the end of the data. This method can be used as a protocol for initiating and terminating communication using a DECT communication apparatus, for which no protocol for initiating and terminating data communication has been established. The communication apparatus can be set in a sleep mode during a period when it is not necessary to perform communication, thereby limiting consumption of battery power.

## Claims

1. A method of initiating and terminating data communication using a DECT data transmitting and receiving apparatus comprising:
a DECT coding section for DECT-encoding serial transmission data;
a transmitting section for transmitting, at a predetermined transmission rate, the data encoded by said DECT coding section;
a receiving section for receiving DECT data;
a demodulation section for demodulating the received DECT data received by said receiving section to output a serial reception data;
a frequency control section for controlling frequencies in said transmitting section and said receiving section;
a transmitting-receiving switching section for switching the connection between an antenna and said transmitting section and the connection between said antenna and said receiving section;
a transmission and reception slots control section for performing slot control of the serial transmission data and the serial reception data in accordance with DECT;
a control section having a storage section in which a control program is stored, from which data can be read, and to which data can be written, said control section controlling each of the other sections;
communication initiation signal detection means for detecting a communication initiation signal contained in transmitted data, and for informing said control section of a detection result;
communication termination signal detection means for detecting a communication termination signal contained in transmitted data or received data, and for informing said control section of a detection result; and
communication initiation and termination control means for controlling communication initiation or communication termination control by an instruction from said control section according to the information from said communication initiation signal detection means or said communication termination signal detection means.

2. A method of initiating and terminating data communication according to Claim 1, wherein communication is initiated by activating a slave unit from a sleeping state into a communicating state when a carrier of the serial transmission data is detected by said communication initiation signal detection means, and communication is terminated by returning said slave unit from the communicating state to the sleeping state when a code such as a carriage return (CR) code or an end-of-file (EOF) is detected at the end of the serial transmission data by said communication termination signal detection means.

3. A method of initiating and terminating data communication according to Claim 1, wherein a master unit initiates communication between said master unit and a slave unit after said master unit has confirmed that an ID code in data transmitted from said slave unit is a predetermined code, and terminates communication between said master unit and said slave unit when an ID code of said slave unit or a predetermined code is not contained in data transmitted from said master unit to said slave unit.

4. A method of initiating and terminating data communication according to Claim 1, wherein communication is initiated according to the communication initiation condition described in Claim 2 or the communication initiation condition described in Claim 3, and communication is terminated according to the communication termination condition described in Claim 2 or the communication termination condition described in Claim 3.
